# EUROPÄISCHE PATENTSCHRIFT

(11) **EP 1 327 533 B1**
(45) Veröffentlichungstag und Bekanntmachung des Hinweises auf die Patenterteilung: **19.03.2008**
(21) Anmeldenummer: 02027240.7
(22) Anmeldetag: 06.12.2002
(51) Int. Cl.: B44C 3/04, C08L 91/06, C08L 91/08, C08K 7/16, C08K 7/28

(54) **Modelliermasse sowie deren Verwendung**
Modelling paste composition and its use
Composition de pâte à modeler et ses utilisations

(30) Priorität: 15.01.2002 DE 10201946
(43) Veröffentlichungstag der Anmeldung: 16.07.2003
(73) Patentinhaber: J.S. Staedtler GmbH & Co KG, 90427 Nürnberg (DE)
(72) Erfinder: Eichhammer, Josef, 92318 Neumarkt (DE); Schuster, Josef, 92364 Deining (DE); Hummel, Heidi, Dr., 92224 Amberg (DE); Schnorrer, Heinrich, 92421 Schondorf (DE); Breindl, Johann, 92339 Biberbach (DE)

(56) Entgegenhaltungen:
- DE-A- 1 902 299
- US-A- 3 607 332

## Beschreibung

Die Erfindung betrifft eine schwimmfähige Modelliermasse für Kinder zur Herstellung von Formen, Modellen, oder Gegenständen.

Plastische Massen zum Formen und Modellieren sind prinzipiell bekannt.

So sind aus DE 297 20 344 U1 und US-PS 3,607,332 Industrieplastiline auf Wachsbasis bekannt, die für den Design-Modellbau in der Autoindustrie eingesetzt werden. Die dort beschriebenen leichten Modelliermassen bestehen aus Mineralien, Bindemitteln, Leichtfüllstoffen und Farbgebern und können bei Temperaturen über 50°C verarbeitet, beispielsweise extrudiert und anderweitig verformt werden und erzielen nach Abkühlung auf Raumtemperatur eine kerzenwachsähnliche Endhärte. Je weiter die Temperatur absinkt, desto starrer bzw. härter wird das aus der Masse gebildete Modell. Die so hergestellten formstabilen Modelle oder Vorformen können dann maschinell CNC gefräst oder manuell mit Kratzwerkzeugen weiter bearbeitet werden. Nachteilig ist, dass diese in der Industrie eingesetzten Massen keinen endgültigen Aggregatzustand besitzen und bei üblicher Raumtemperatur nicht knet- und/oder modellierbar sind und sich damit als Knetmasse für Kinder nicht eignen.

Die DE1902299 offenbart eine Modelliermasse bestehend aus einem Erdwachs (bevorzugt ein mikro-kristallines Wachs), einem Plastifiziermittel (bevorzugt ein geradkettiger Kohlenwasserstoff) und einem inerten Füllstoff (bevorzugt aus Kalkstein).

Weiterhin sind aus DE 40 08 980 C2 plastische Massen zum Kneten, Modellieren, Basteln und Dekorieren bekannt, die neben organischen Weichmachern und sonstigen Füllstoffen auch Bindemittel, Füllstoffe und/oder als weiteren Zusatz Polyalkylmethacrylat (PAMA), insbesondere Polymethylmethacrylat (PMMA), Polyethylmethacrylat (PEMA), Polypropylmethacrylat (PPMA) oder Polybutylmethacrylat (PBMA), enthalten sollen.
Nachteilig bei derartigen Knetmassen ist, dass diese organische Weichmacher beinhalten, deren Verwendung bei Knetmassen für Kinder und empfindlichen Personen vermieden werden sollen. Weiter ist es hierbei nachteilig, dass derartige Massen zwar bei Raumtemperatur knetbar sind, aber auch bei Raumtemperatur irreversibel aushärten und damit von Kinderhänden nicht mehr weiter bearbeitet werden können.

**Aufgabe** der Erfindung ist es daher, eine schwimmfähige Modelliermasse für Kinder zum Basteln, Modellieren und Gestalten von Objekten zu schaffen, die die genannten Nachteile nicht aufweist und die insbesondere bei Raumtemperatur gut und leicht knetbar und bearbeitbar ist und bei normalen Bedingungen dauerelastisch bleibt und nicht aushärtet.
Weiter ist es Aufgabe der Erfindung, dass die Knetmasse, welche bevorzugt für die Verwendung durch Kinder vorgesehen ist und daher auch frei von für Menschen bedenklichen Inhaltsstoffen ist. Zudem soll sie sich in Wasser nicht auflösen und schwimmfähig sein.

Diese Aufgaben werden mit dem in Anspruch 1 umfassten Merkmale gelöst.
Vorteilhafte Ausgestaltungen und Weiterbildungen der erfindungsgemäßen Massen sind in den weiteren Ansprüchen umfasst.

Die besonderen Vorteile der Massen liegen in der leichten Bearbeitbarkeit der Knetmasse mit bloßen Händen. Die Konsistenz der Knetmasse ist bei normaler Umgebungstemperatur annähernd konstant und härtet bei offener Lagerung auch über längere Zeiträume nicht aus. Erreicht wird diese Eigenschaft der Knetmasse durch den Einsatz von ausgewählten Arten und Mengen von Bindemitteln auf Wachs- und Ölbasis und mit unterschiedlicher Konsistenz.

Um der Knetmasse die gewünschte Weichheit zu erhalten, werden der festen Wachskomponente (BM1) eine pastöse Wachskomponente (BM2) und flüssige Wachs- und/oder Ölkomponenten (BM3) zugesetzt. Somit enthählt das Bindemittel in der erfindungsgemäßen Knetmasse mindestens zwei Gruppen von Wachsen unterschiedlicher Konsistenz.

Beispiele für feste Wachse (BM1) sind mikrokristallines Wachs, Bienenwachs, Carnaubawachs, Paraffinwachs, Polyethylenwachs, Polypropylenwachs.
Ein Beispiel für ein halbfestes Wachs (BM2) bzw. Mineralfett ist Vaseline, ein halbfestes Paraffinwachs (Weichparaffin). Ein dickflüssiges Wachs (BM3) ist beispielsweise dickflüssiges Paraffin.
Alternativ zum dickflüssigen Wachs kann Weißöl (BM3) und/oder auch ein pflanzliches Öl (BM3) wie beispielsweise Olivenöl eingesetzt werden.

Den Bindemitteln (BM) können ggf. auch als weitere Zusätze (ZS) geringe Mengen Tenside, Glykole, Lösungsmittel, Konservierungsmittel und sonstige Substanzen enthalten.

Als Füllstoffe (FS) werden im Wesentlichen sogenannte Leichtfüllstoffe (FSL) eingesetzt. Hierbei handelt es sich um Mikrohohlkugeln aus Glas oder wasserbeständigen Kunststoffen. Um besondere Effekte oder Wirkungen zu erzielen können derartige Hohlkugeln mit Oberflächenbeschichtungen oder auch mit besonderen Füllungen versehen sein.
Je nach Gehalt derartiger Hohlkugeln kann eine gewünschte Dichte eingestellt werden. Diese kann vorteilhaft im Bereich von 0,3 bis 1,1 g/ml liegen. Auch die Größe von Handelsüblichen Hohlkugeln kann frei gewählt werden. Die Größe der Hohlkugeln liegt vorzugsweise im Bereich von 10 bis 400µm.

Weiter kann die Gesamtmischung neben den erwähnten Leichtfüllstoffen (FSL) auch Füllstoffe (FS2) wie z.B. Kaolin, Kreide, Talkum, Metallglitter, Glitzerpulver und Glitzerplättchen oder Mischungen dieser Stoffe aufweisen um dadurch beispielsweise besondere optische Effekte zu erzielen.
Der Anteil dieser anderen Füllstoffe (FS2) überschreitet jedoch 10 Gew. % an der Gesamtmasse nicht, damit die "Leichtigkeit" aufgrund geringer Dichte des Produktes nicht verloren geht und die gestalteten Objekte beispielsweise im Badewasser schwimmfähig bleiben. Damit können Modelliermasse geschaffen werden, die keine Kaoline, Talk und/oder Zinkstearate als sonstige Füllstoffe (FS2) aufweisen.

Als Farbmittel (FM) können Pigmente in reiner Form, als Pulverpigmente oder wässrige Pigmentpräparationen vorliegen. Als Auswahl einer Vielzahl von möglichen Farbpigmenten seien Pigment Yellow 1 (C.I. 11680), Pigment Red 112 (C.I. 12370) und Pigment Blue 15 (C.I. 74160) genannt.
Durch die Zugabe dieser Farbmittel erhält die Knete ein brillantes Aussehen.
Alternativ zu den Pigmenten ist es möglich, dass verlackte Lebensmittelfarbstoffe eingesetzt werden. Beispiele für verlackte Lebensmittelfarbstoffe sind Chinolingelb Lack E104, Indigotin Lack E 132 und Ponceau 4R Lack E 124.
Es ist zu beachten, dass der Gehalt an Farbmitteln vorzugsweise einen Gehalt von 10 Gew.-% an der Gesamtmischung nicht überschreiten sollte. In diesem Bereich wird die Konsistenz durch die Zugabe von Farbmitteln (FM) nicht bzw. nicht maßgeblich verändert.

Unterschiedlich eingefärbte Knetmassen können zudem beliebig miteinander vermengt oder vermischt werden, wodurch Marmorierungseffekte erzielt werden.
Zweckmäßiger Weise sollten die verwendeten Farbmittel (FM) in der Knetmasse selbst nicht mehr wasserlöslich sein.

Die Masse soll anhand eines Rahmenbeispiels sowie einigen Rezepturbeispielen näher dargestellt werden.

### Rahmenbeispiel 1; Gesamtmischung der Knete

45 - 85 Gew.-% Bindemittel (BM)
0 - 10 Gew.-% Farbmittel (FM)
15 - 40 Gew.-% Leichtfüllstoff (FSL)
0 - 20 Gew.-% sonstige Füllstoffe (FS2)
0 - 5 Gew. % sonstige Zusätze (ZS)

### Rahmenbeispiel 2; Mischung von Bindemittelkomponenten (BM)

25 - 85 Gew.-% festes Wachs (BM 1)
10 - 25 Gew.-% pastöses Wachs (BM 2)
4 - 15 Gew.-% flüssiges Wachs und/oder Öl (BM 3)

### Rahmenbeispiel 3; Mischung des Bindemittels (BM)

20 - 60 Gew.-% Mikrokristallines Wachs (BM 1)
5 - 25 Gew.-% Paraffinwachs (BM 1)
10 - 25 Gew.-% Vaseline (BM 2)
4 - 15 Gew.-% Weißöl (BM 3)

### Rezepturbeispiel 1 - gelbe Knete

| | |
|---|---|
| Mikrokristallines Wachs (BM1) | 39 Gew.-% |
| Paraffinwachs (BM1) | 14 Gew.-% |
| Vaseline(BM2) | 15 Gew.-% |
| Weißöl(BM3) | 7 Gew.-% |
| Mikrohohlkugeln(FSL) | 24 Gew.-% |
| Pigment Yellow 1(FM) | 1 Gew.-% |

### Rezepturbeispiel 2 - rote Knete

| | |
|---|---|
| Mikrokristallines Wachs(BM1) | 28 Gew.-% |
| Paraffinwachs(BM1) | 18 Gew.-% |
| Vaseline(BM2) | 18 Gew.-% |
| Weißöl(BM3) | 9 Gew.-% |
| Mikrohohlkugeln(FSL) | 26 Gew.-% |
| Pigment Red 112(FM) | 1 Gew.-% |

### Rezepturbeispiel 3 - blaue Knete

| | |
|---|---|
| Mikrokristallines Wachs (BM1) | 52 Gew.-% |
| Paraffinwachs(BM1) | 9 Gew.-% |
| Vaseline(BM2) | 11 Gew.-% |
| Weißöl(BM3) | 5 Gew.-% |
| Mikrohohlkugeln(FSL) | 22 Gew.-% |
| Pigment Blue 15(FM) | 1 Gew.-% |

### Rezepturbeispiel 4 - weiße Knete

| | |
|---|---|
| Mikrokristallines Wachs(BM1) | 39 Gew.-% |
| Paraffinwachs(BM1) | 14 Gew.-% |
| Vaseline(BM2) | 15 Gew.-% |
| Weißöl(BM3) | 7 Gew.-% |
| Mikrohohlkugeln(FSL) | 24 Gew.-% |

### Rezepturbeispiel 5- Kombi Knete

| | |
|---|---|
| Mikrokristallines Wachs (BM1) | 36 Gew.-% |
| Paraffinwachs (BM1) | 14 Gew.-% |
| Vaseline(BM2) | 15 Gew.-% |
| Weißöl(BM3) | 7 Gew.-% |
| Mikrohohlkugeln(FSL) | 19 Gew.-% |
| Kaolin(FS2) | 8 Gew.-% |
| Pigment Yellow 1(FM) | 1 Gew.-% |

### Rezepturbeispiel 6- gelbe Knete

| | |
|---|---|
| Mikrokristallines Wachs(BM1) | 55 Gew.-% |
| Bienenwachs (BM1) | 11 Gew.-% |
| Vaseline(BM2) | 14 Gew.-% |
| Paraffinöl (BM3) | 4 Gew.-% |
| Mikrohohlkugeln(FSL) | 16 Gew.-% |
| Chinolingelb Lack E104(FM) | 1 Gew.-% |

Der Gehalt an leichtem Füllmaterial wie beispielsweise Mikrohohlkugeln (FSL) sollte vorzugsweise einen Gehalt von 15% Gew. % nicht unterschreiten, damit sich die Knetmasse trocken anfühlt und eine geschmeidige Konsistenz bekommt, sowie eine ausreichende Formstabilität behält. Die geformten Objekte sind weich aber stabil und sind ggf. auch über Wochen in flüssigen Medien, wie kaltem und warmem Wasser schwimmfähig.

Eine gewünschte Konsistenz der Knetmasse kann problemlos durch die Variation der verschiedenen Bindemittel zueinander und deren Anteile eingestellt werden.
Je nach Mischungsverhältnis der Bindemittelkomponenten, von flüssigen und pastösen Anteilen, unterscheiden sich die Eigenschaften der Knetmasse.

Ist der Anteil an flüssigen Bindemitteln (BM3), wie Weißöl hoch, so bildet sich während des Knetens ein Ölfilm auf den Händen. Ist hingegen der Anteil an pastösen Anteilen (BM2) hoch, und wird im Extremfall nur Vaseline eingesetzt, wirkt die Knetmasse sehr fettig und verliert zudem an Formstabilität.
Die Bestandteile Wachs, Vaseline und Öl sollen daher in einem ausgewogenen Verhältnis, auch zueinander vorliegen.

Die Modelliermasse eignet sich aufgrund geringer Dichte bestehender Leichtigkeit, eines warmen Gefühles beim Greifen und einer Umformbarkeit mit geringem Kraftaufwand, besonders auch zu therapeutischen Zwecken im medizinischen Bereich, speziell für Kinder aber auch für Erwachsene, um habtische Fähigkeiten zu trainieren bzw. nach Verletzungen, wie Frakturen, zum Rehabilitieren.

Die Modelliermasse wird von Kindern gerne als Spielknete zum Umformen und/oder Herstellen von Gegenständen verwendet.

## Patentansprüche

1. **Schwimmfähige Modelliermasse für Kinder** bestehend aus Bindemittel (BM), Füllstoff (FS), Farbmittel (FM) sowie ggf. weiteren Zusatzstoffen (ZS), wobei das Bindemittel (BM) auf Wachs- und Ölbasis aufgebaut ist und wobei der Füllstoff (FS) im Wesentlichen ein Leichtfüllstoff (FSL) aus Mikrohohlkugeln ist
**dadurch gekennzeichnet,**
**dass** sich das Bindemittel (BM) aus festem Wachs (BM1), pastösem Wachs (BM2) und flüssigem Anteil (BM3) auf Wachs-und/oder Ölbasis zusammensetzt,
**dass** der Gehalt an Bindemittel (BM) in der Modellier-masse zwischen 45 und 90 Gew.-% liegt,
und **dass** ein Gehalt an weiteren Füllstoffen (FS2) von 10 Gew.% nicht überschritten wird.

2. **Modelliermasse** nach Anspruch 1,
**dadurch gekennzeichnet,**
**dass** sich das Bindemittel aus
25 - 85 Gew.-% festem Wachs (BM 1)
10 - 25 Gew.-% pastösem Wachs (BM 2)
4 - 15 Gew.-% flüssigem Wachs und/oder Öl (BM 3)
zusammensetzt.

3. **Modelliermasse** nach Anspruch 1 oder 2,
**dadurch gekennzeichnet,**
**dass** sich das Bindemittel aus
20 - 60 Gew.-% Mikrokristallines Wachs (BM 1)
5 - 25 Gew.-% Paraffinwachs (BM 1)
10 - 25 Gew.-% Vaseline (BM 2)
4 - 15 Gew.-% Weißöl (BM 3)
zusammensetzt.

## Claims

1. Floatable modelling material for children, consisting of binder (BM), filler (FS), colorant (FM) as well as optionally further additives, (ZS), wherein the binder (BM) is constructed on a wax and oil basis and wherein the filler (FS) is substantially a lightweight filler (FSL) of hollow microspheres, **characterised in that** the binder (BM) is composed of solid wax (BM1), pasty wax (BM2) and liquid component (BM3) on a wax and/or oil basis, that the content of binder (BM) in the modelling material is between 45 and 90 weight % and that a content of further fillers (FS2) of 10 weight % is not exceeded.

2. Modelling material according to claim 1, **characterised in that** the binder is composed of
25 to 85 weight % solid wax (BM1)
10 to 25 weight % pasty wax (BM2) and
4 to 15 weight % of liquid wax and/or oil (BM3).

3. Modelling material according to claim 1 or 2, **characterised in that** the binder is composed of
20 to 60 weight % microcrystalline wax (BM1),
5 to 25 weight % paraffin wax (BM1),
10 to 25 weight % vaseline (BM2) and
4 to 15 weight % paraffin oil (BM3).

## Revendications

1. Pâte à modeler capable de flotter pour enfants, composée d'un liant (BM), d'une matière de charge (FS), d'un colorant (FM) ainsi qu'éventuellement d'autres additifs (ZS), dans laquelle le liant (BM) est élaboré à base de cire et d'huile, et dans laquelle la matière de charge (FS) est essentiellement une matière de charge légère (FSL) faite de microbilles creuses,
**caractérisée en ce que** le liant (BM) se compose de cire solide (BM1), de cire pâteuse (BM2) et d'une fraction fluide (BM3) à base de cire et/ou d'huile, **en ce que** la teneur en liant (BM) dans la pâte à modeler est comprise entre 45 et 90 % en poids, et **en ce qu'**on ne dépasse pas une teneur en autres matières de charge (FS2) de 10 % en poids.

2. Pâte à modeler selon la revendication 1, **caractérisée en ce que** le liant se compose de
25 à 85 % en poids de cire solide (BM1),
10 à 25 % en poids de cire pâteuse (BM2),
4 à 15 % en poids de cire et/ou d'huile fluide (BM3).

3. Pâte à modeler selon la revendication 1 ou 2, **caractérisée en ce que** le liant se compose de
20 à 60 % en poids de cire microcristalline (BM1),
5 à 25 % en poids de cire de paraffine (BM1),
10 à 25 % en poids de vaseline (BM2),
4 à 15 % en poids d'huile blanche (BM3).
